# EUROPÄISCHE PATENTANMELDUNG

(11) **EP 4 290 208 A1**
(43) Veröffentlichungstag der Anmeldung: **13.12.2023**
(21) Anmeldenummer: 23168271.7
(22) Anmeldetag: 17.04.2023
(51) Int. Cl.: G01M 17/02, B60C 11/24, G01B 11/22

(54) **VERFAHREN ZUR BEWERTUNG DES PROFILZUSTANDES VON FAHRZEUGREIFEN**

(30) Priorität: 10.06.2022 DE 102022205924
(71) Anmelder: Continental Reifen Deutschland GmbH, 30165 Hannover (DE)
(72) Erfinder: Kurz, Martin, 30165 Hannover (DE); Pietsch, Holger, 30165 Hannover (DE)
(74) Vertreter: Continental Corporation

(57) **Zusammenfassung**

Die Erfindung betrifft ein Verfahren zur Bewertung des Profilzustandes von Fahrzeugreifen (10), insbesondere der Profiltiefe und des Abriebzustandes, mit einer Zustandsbewertungsvorrichtung (12), umfassend eine elektronische Datenverarbeitungsvorrichtung (14) mit einer Speichereinheit (16), umfassend die Verfahrensschritte: a) Identifizieren des Reifentyps eines Fahrzeugreifens (10) mit einer Identifikationseinheit (18) der Zustandsbewertungsvorrichtung (12), b) Detektieren einer Oberflächentopografie für zumindest einen Profilabschnitt des Fahrzeugreifens (10) mit einer optischen Detektionseinheit (20) der Zustandsbewertungsvorrichtung (12), c) Bewerten des Zustandes des Profilabschnitts durch Korrelation der detektierten Oberflächentopografie mit zumindest einer mit dem identifizierten Reifentyp verknüpften Profilinformation mit einer Bewertungseinheit (22) der Zustandsbewertungsvorrichtung (12) zum Erhalt einer Zustandsinformation, und d) Ausgeben der Zustandsinformation über eine Ausgabeeinheit (24) der Zustandsbewertungsvorrichtung (12).

## Beschreibung

Die Erfindung betrifft ein Verfahren zur Bewertung des Profilzustandes von Fahrzeugreifen, ein darauf aufbauendes Verfahren zur Konfiguration eines Fahrzeugs, sowie eine Zustandsbewertungsvorrichtung für den Einsatz in einem entsprechenden Verfahren. Offenbart wird zudem ein Computerprogrammprodukt für eine solche Zustandsbewertungsvorrichtung.

Angesichts einer stetigen Zunahme des weltweiten Straßenverkehrs und dem damit verbundenen Anstieg an Verkehrsunfällen wird dem Aspekt der Fahrsicherheit in den letzten Jahren eine immer größere Bedeutung beigemessen. Ein Fahrzeugbestandteil, welcher maßgeblich für die Fahrsicherheit mitverantwortlich ist, sind die eingesetzten Fahrzeugreifen, die beispielsweise gezielt auf die zu erwartenden Umwelteinflüsse abgestimmt werden, um das Fahr- und Bremsverhalten zu optimieren.

Neben der Art der eingesetzten Gummimischung kommt dabei mit Blick auf die fahrsicherheitsrelevanten Eigenschaften der Fahrzeugreifen insbesondere dem Reifenprofil eine besondere Bedeutung zu, welches durch seine Strukturierung maßgeblich für die Fahr- und Bremseigenschaften mitverantwortlich ist. Bei längerem Betrieb nutzen sich Fahrzeugreifen jedoch ab, wobei das Laufstreifenprofil und die spezifische Strukturierung mit der Zeit abgetragen werden. Angesichts der hohen sicherheitstechnischen Relevanz eines ausreichend ausgeprägten Laufstreifenprofils bestehen in vielen Ländern strenge Vorgaben über die einzuhaltenden Mindestprofiltiefen.

In vielen Ländern ist der Fahrzeughalter dazu angehalten, die verbleibende Profiltiefe der Fahrzeugreifen regelmäßig zu bestimmen. In der Alltagspraxis kommen hierfür teilweise sehr einfache Tests unter Einsatz eines Lineals oder ähnlicher Größenreferenzen zum Einsatz.

Im Zuge der fortschreitenden Digitalisierung wurde insoweit aber versucht, die manuelle Bestimmung der Profilrillentiefe mit elektronischen Auswerteeinrichtungen vorzunehmen, die beispielsweise ausgehend von Bildaufnahmen die verbleibende Profiltiefe abschätzen können.

An den im Stand der Technik vorgeschlagenen (teil-)automatisierten Verfahren zur Bestimmung der verbleibenden Profiltiefe mit elektronischen Geräten wird jedoch in vielen Fällen als nachteilig empfunden, dass diese in Ermangelung einer klaren internen Referenz häufig mit einer vergleichsweise großen Unsicherheit behaftet sind und insbesondere in der Endkundenanwendung oft nur eine grobe Einschätzung der Profiltiefe ermöglichen.

Darüber hinaus wird an den aus dem Stand der Technik bekannten (teil-)automatisierten Verfahren zur Bestimmung der verbleibenden Profiltiefe mit elektronischen Geräten zumeist ein Aspekt als nachteilig empfunden, welcher sich auch beim manuellen Ablesen der Profiltiefe, beispielsweise mit einem Lineal, ergibt. Dem Fahrzeughalter fehlt bei beiden Vorgehensweisen nämlich eine zuverlässige Information über den Ausgangszustand des Fahrzeugreifens, sofern er nicht wider Erwarten einen noch nicht benutzten Fahrzeugreifen des gleichen Typs griffbereit hat, um die ortsaufgelöste Profiltiefe im abgenutzten und im neuen Zustand miteinander zu vergleichen. Somit ist die binäre Bestimmung der relativen Profiltiefe, unabhängig davon, ob sie manuell oder digital erfolgt, regelmäßig nicht geeignet, dem Fahrzeughalter ein umfassendes Bild über den Abnutzungszustand zu vermitteln, da insbesondere die relative Verschlechterung des Reifenzustands nicht ohne unzumutbaren Aufwand bzw. ohne ein verfügbares Vergleichssystem zu bewerten ist.

Dies hat zur Folge, dass es mit den aus dem Stand der Technik bekannten Verfahren zur Bestimmung der Profiltiefe auch regelmäßig nicht möglich ist, die Gleichmäßigkeit der Abnutzung des Fahrzeugreifens zu bewerten. Eine ungleichmäßige Abnutzung des Fahrzeugreifens, welche zumeist auf ein unzureichend abgestimmtes Fahrsystem zurückzuführen ist, kann sich dabei auf die Fahrsicherheit ebenso nachteilig auswirken, wie eine unzureichende absolute Profiltiefe, wobei aus einem ungleichmäßigen Abnutzungszustand insbesondere auch dann Gefahren resultieren können, wenn die im Stand der Technik zumeist vermessenen zentralen Profillinien noch die erforderlichen Mindestprofiltiefen aufweisen. Darüber hinaus führt ein unregelmäßiges Abriebsverhalten in jedem Fall zu einer verkürzten Lebensdauer der Fahrzeugreifen, sodass die Wechselintervalle verkürzt werden müssen, mehr ungewollter Abfall anfällt und die Betriebskosten für das Fahrzeug insgesamt steigen.

Es war die primäre Aufgabe der vorliegenden Erfindung, die Nachteile des Standes der Technik auszuräumen oder zumindest zu verringern.

Insbesondere war es die Aufgabe der vorliegenden Erfindung, ein Verfahren zur Bewertung des Profilzustandes von Fahrzeugreifen anzugeben, mit dem nicht nur die Profiltiefe in einem gebrauchten Fahrzeugreifen zuverlässig bestimmt werden kann, sondern in dem auch die so bestimmten Profilinformationen mit Informationen über den Ausgangszustand des Fahrzeugreifens korreliert werden können, um detaillierte Zustandsinformationen zu erhalten.

Insoweit war es eine Aufgabe der vorliegenden Erfindung, dass das anzugebende Verfahren neben der absoluten Profiltiefe insbesondere auch die relative Änderung der Profiltiefe, wünschenswerterweise in ortsaufgelöster Form, als Zustandsinformation ausgeben sollte. Insofern war es wünschenswert, dass das anzugebende Verfahren in der Lage sein sollte, eine ortsaufgelöste Information über das Abriebsverhalten zu liefern, wobei es wünschenswert war, dass das anzugebende Verfahren dem Anwender diese Information in einer schnell verständlichen Art und Weise bereitstellen sollte, die insbesondere auch eine leichte anschließende visuelle Prüfung ermöglichen sollte.

Es war eine Aufgabe der vorliegenden Erfindung, dass das anzugebende Verfahren möglichst weitgehend digitalisiert bzw. automatisiert durchführbar sein sollte, wobei es wünschenswert war, dass das anzugebende Verfahren auch mit solchen mobilen Endgeräten durchführbar sein sollte, auf die die meisten Fahrzeughalter ohnehin Zugriff haben.

Es war eine weitere Aufgabe der vorliegenden Erfindung, ein Verfahren zur Konfiguration eines Fahrzeugs anzugeben, mit dem das Fahrsystem des Fahrzeugs besonders präzise und genau dahingehend eingestellt werden kann, dass sich ein möglichst gleichmäßiger Abrieb der Fahrzeugreifen ergibt.

Darüber hinaus war es eine Aufgabe der vorliegenden Erfindung, eine Zustandsbewertungsvorrichtung für den Einsatz in einem entsprechenden Verfahren anzugeben.

Es war eine sekundäre Aufgabe der vorliegenden Erfindung, ein Computerprogrammprodukt für eine solche Zustandsbewertungsvorrichtung anzugeben, mit dem das anzugebende Verfahren durchgeführt werden kann.

Die Erfinder der vorliegenden Erfindung haben nunmehr gefunden, dass sich die vorstehend beschriebenen Aufgaben überraschenderweise lösen lassen, wenn eine optische Bildinformation des zu bewertenden Fahrzeugreifens unter Rückgriff auf eine verlässliche Referenz ausgewertet wird, wobei die aufgenommenen Daten automatisch mit Referenzdaten abgeglichen werden, welche für den zuvor automatisiert erkannten Reifentyp verfügbar sind, wie es in den Ansprüchen definiert ist. Wenn der Reifentyp in dieser Weise erkannt wurde, kann der Abrieb bzw. die ortsaufgelöste Reduzierung der Profiltiefe mithilfe der aufgenommenen Daten im Vergleich mit den für den Fahrzeugtyp hinterlegten Referenzdaten erfolgen, wobei die Erfinder für sämtliche der notwendigen Operationen besonders geeignete Ausführungsformen identifizieren konnten.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Zustandsbewertungsvorrichtungen und Computerprogrammprodukte ergeben sich aus den Merkmalen bevorzugter Verfahren.

Die Erfindung betrifft ein Verfahren zur Bewertung des Profilzustandes von Fahrzeugreifen, insbesondere der Profiltiefe und des Abriebzustandes, mit einer Zustandsbewertungsvorrichtung, umfassend eine elektronische Datenverarbeitungsvorrichtung mit einer Speichereinheit, umfassend die Verfahrensschritte:
a) Identifizieren des Reifentyps eines Fahrzeugreifens mit einer Identifikationseinheit der Zustandsbewertungsvorrichtung,
b) Detektieren einer Oberflächentopografie für zumindest einen Profilabschnitt des Fahrzeugreifens mit einer optischen Detektionseinheit der Zustandsbewertungsvorrichtung,
c) Bewerten des Zustandes des Profilabschnitts durch Korrelation der detektierten Oberflächentopografie mit zumindest einer mit dem identifizierten Reifentyp verknüpften Profilinformation mit einer Bewertungseinheit der Zustandsbewertungsvorrichtung zum Erhalt einer Zustandsinformation, und
d) Ausgeben der Zustandsinformation über eine Ausgabeeinheit der Zustandsbewertungsvorrichtung.

Das erfindungsgemäße Verfahren eignet sich prinzipiell zur Bestimmung des Profilzustandes von sämtlichen Fahrzeugreifen, sofern diese im Laufstreifen über ein Profil verfügen, welches bewertet werden kann. Bevorzugt ist ein erfindungsgemäßes Verfahren, wobei der Fahrzeugreifen ein Fahrzeugluftreifen ist. Beispielhaft ist ein erfindungsgemäßes Verfahren, wobei der Fahrzeugreifen ein LKW- oder PKW-Reifen, bevorzugt ein PKW-Reifen, ist.

Das erfindungsgemäße Verfahren wird unter Zuhilfenahme einer Zustandsbewertungsvorrichtung durchgeführt. Diese Zustandsbewertungsvorrichtung umfasst eine Datenverarbeitungsvorrichtung und eine Speichereinheit, wobei die Datenverarbeitungsvorrichtung in Übereinstimmung mit dem fachmännischen Verständnis bei der Umsetzung der Verfahrensschritte a) bis d) zum Einsatz kommt, wobei sie insbesondere ein Computerprogrammprodukt ausführen kann, wie es nachfolgend offenbart ist.

Es kann als Vorteil des erfindungsgemäßen Verfahrens gesehen werden, dass die Zustandsbewertungsvorrichtung prinzipiell in sehr unterschiedlicher Weise ausgeführt werden kann. Insbesondere für den Einsatz in Fachbetrieben kann diese als leistungsstarke stationäre Vorrichtung vorgesehen werden. Nach Einschätzung der Erfinder eignet sich das erfindungsgemäße Verfahren jedoch besonders gut dafür, auch dem Endkunden und Fahrzeughalter eine zuverlässige Bewertung des Abnutzungsstandes zu ermöglichen, in welchem Fall die Zustandsbewertungsvorrichtung insbesondere durch solche elektronischen Endgeräte bereitgestellt werden kann, die beim Endnutzer ohnehin verfügbar sind. Bevorzugt ist somit ein erfindungsgemäßes Verfahren, wobei die elektronische Zustandsbewertungsvorrichtung eine tragbare Zustandsbewertungsvorrichtung, bevorzugt ein mobiles elektronisches Endgerät, bevorzugt ein Mobiltelefon oder ein Tablet, ist. Bevorzugt ist alternativ ein erfindungsgemäßes Verfahren, wobei die elektronische Zustandsbewertungsvorrichtung eine stationärer Zustandsbewertungsvorrichtung, bevorzugt ein Messstand, ist.

Das erfindungsgemäße Verfahren umfasst vier Schritte a) bis d), die jeweils von einer spezifischen Einheit der Zustandsbewertungsvorrichtung durchgeführt werden. Der Fachmann versteht, dass diese Einheiten jeweils spezifisch dafür eingerichtet sind, den jeweiligen Verfahrensschritt durchzuführen, hinsichtlich der genauen Ausgestaltung der jeweiligen Einheit jedoch mehrere Möglichkeiten bestehen, aus denen der Fachmann wählen kann, sofern diese die notwendige Funktionalität ermöglichen. Die in den Verfahrensschritten a), b) und d) eingesetzten Einheiten, d. h. die Identifikationseinheit, die optische Detektionseinheit und die Ausgabeeinheit erlauben dabei in jedem Fall eine Interaktion mit der Umwelt und umfassen physische Komponenten, wie es nachfolgend offenbart ist, die jedoch in der Praxis mit der Datenverarbeitungsvorrichtung interagieren, weil sie beispielsweise von dieser gesteuert werden. Der Fachmann versteht, dass im Unterschied hierzu die in Verfahrensschritt c) eingesetzte Bewertungseinheit durch ein Computerprogrammprodukt oder einen vergleichbaren Algorithmus gebildet wird, der auf der Datenverarbeitungsvorrichtung ausgeführt wird.

Das erfindungsgemäße Verfahren umfasst den Verfahrensschritt a), mit dem der Reifentyp des zu bewertenden Fahrzeugreifens erkannt werden soll. Dies erfolgt mittels einer Identifikationseinheit der Zustandsbewertungsvorrichtung. Die Erfinder der vorliegenden Erfindung schlagen zum einen vor, dass es sich bei dieser Identifikationseinheit beispielsweise um eine elektronische Ausleseeinheit handeln kann, mit der beispielsweise RFID-Chips, welche im Fahrzeugreifen angeordnet sind, ausgelesen werden können, oder die auf Informationen zugreifen, welche mittels eines QR-Codes auf dem Reifen vermerkt sind, wobei letzteres regelmäßig unter Einsatz einer optischen Bilderfassungsvorrichtung erfolgen wird. Vorteilhaft ist hierbei, dass diese Form des Auslesens regelmäßig eine besonders zuverlässige Identifikation des Reifentyps ermöglicht und weniger anfällig für Fehlinterpretationen ist als komplexere, bildbasierte Verfahren, wie sie nachfolgend offenbart sind. Ebenfalls vorteilhaft ist, dass die entsprechenden Funktionalitäten der Identifikationseinheit regelmäßig über typische elektronische Endgeräte bereitgestellt werden können, beispielsweise Mobiltelefone, welche über entsprechende Lesegeräte verfügen, und eine entsprechende Identifikation somit gerade für den Endnutzer leicht möglich ist. Bevorzugt ist vor diesem Hintergrund ein erfindungsgemäßes Verfahren, wobei die Identifikationseinheit eine elektronische Ausleseeinheit umfasst, die dazu eingerichtet ist, ein im Fahrzeugreifen angeordnetes elektronisches Identifikationselement, bevorzugt einen RFID- oder NFC-Element, besonders bevorzugt ein RFID-Element, oder ein am Fahrzeugreifen angeordnetes Kennzeichnungselement, bevorzugt einen QR-Code oder einen Barcode, auszulesen, um den Reifentyp über eine vom Identifikationselement oder Kennzeichnungselement auslesbare Information zu identifizieren.

An dem Einsatz einer elektronischen Ausleseeinheit ist nach Einschätzung der Erfinder jedoch nachteilig, dass diese das Vorhandensein von entsprechenden auslesbaren Elementen im oder am Fahrzeugreifen erfordert. Entsprechend haben die Erfinder eine Identifikationseinheit konzipiert, die diese Notwendigkeit entfernt und damit die zuverlässige Identifikation von Fahrzeugreifen ermöglicht, auch wenn dieser keine Identifikations- und/oder Kennzeichnungselemente umfasst. Hierfür schlagen die Erfinder nämlich vor, mit einer optischen Bilderfassungsvorrichtung, beispielsweise der Kamera eines Mobiltelefons, eine Aufnahme vom Fahrzeugreifen, insbesondere des charakteristischen Profils des Fahrzeugreifens, aufzunehmen und diese mittels der elektronischen Datenverarbeitungsvorrichtung automatisch einem Reifentyp zuzuordnen, was nach Einschätzung der Erfinder besonders gut dann funktioniert, wenn die für das erfindungsgemäße Verfahren eingesetzte Software als herstellerspezifische Lösung angeboten wird und entsprechend eine vergleichsweise überschaubare Zahl von möglichen Profilen und Reifentypen in Frage kommt. Der Fachmann versteht insoweit, dass, insbesondere wenn die Identifikation über Teile des Fahrzeugreifens erfolgt, bei denen es sich nicht um das Laufstreifenprofil handelt, diese bildbasierte Auswertung zumeist auf andere kennzeichnende Elemente, beispielsweise die Beschriftung im Seitenbereich, zurückgreifen wird. Insofern besteht hier eine gewisse Schnittmenge zu dem vorstehend beschriebenen Einsatz von Kennzeichnungselementen wie QR-Codes. Bevorzugt ist zusammenfassend ein erfindungsgemäßes Verfahren, wobei die Identifikationseinheit eine erste optische Bilderfassungsvorrichtung umfasst, wobei das Identifizieren in Verfahrensschritt a) das Erzeugen eines Bildes des Fahrzeugreifens, bevorzugt eines Profilabschnitts des Fahrzeugreifens, mit der ersten optischen Bilderfassungsvorrichtung umfasst, wobei die elektronische Datenverarbeitungsvorrichtung dazu eingerichtet ist, den Reifentyp des Fahrzeugreifens ausgehend vom erzeugten Bild des Fahrzeugreifens zu identifizieren.

Die vorstehend beschriebene Funktion der Identifikation des Reifentyps aus dem erzeugten Bild des Fahrzeugreifens kann dabei nach Einschätzung der Erfinder auf unterschiedliche Weisen erfolgen, wobei verschiedene Softwarelösungen am Markt verfügbar sind, beispielsweise zur sogenannten "pattern recognition", auf die der Fachmann in Abhängigkeit der von ihm angestrebten Funktionalität zurückgreift bzw. die er an die jeweiligen Anforderungen des Einsatzzweckes anpasst.

Eine Möglichkeit stellt hierbei der Abgleich des erzeugten Bildes mit in der Speichereinheit gespeicherten Bildern von möglichen Fahrzeugreifentypen dar, wobei dies nach Einschätzung der Erfinder mit Blick auf den Speicherbedarf und die benötigte Rechenleistung vor allen Dingen dann zweckmäßig ist, wenn die mögliche Vielfalt an Reifentypen niedrig ist. Bevorzugt ist insofern ein erfindungsgemäßes Verfahren, wobei die elektronische Datenverarbeitungsvorrichtung dazu eingerichtet ist, den Reifentyp des Fahrzeugreifens durch Abgleich des erzeugten Bildes mit einer Vielzahl von in der Speichereinheit gespeicherten Bildern von Fahrzeugreifen mit verschiedenem Reifentyp zu identifizieren.

Nach Einschätzung der Erfinder für im Wesentlichen sämtliche Ausführungsformen bevorzugt ist ein Verfahren, wobei zur Identifikation auf Methoden des maschinellen Lernens zurückgegriffen wird. Hierfür wird ein Identifikationsmodul in der Speichereinheit bereitgestellt, mit dessen Hilfe die elektronische Datenverarbeitungsvorrichtung das erzeugte Bild des Fahrzeugreifens auswerten kann. Besonders bevorzugt ist entsprechend ein erfindungsgemäßes Verfahren, wobei auf der Speichereinheit ein auf maschinellem Lernen basierendes Identifikationsmodul gespeichert ist, wobei die elektronische Datenverarbeitungsvorrichtung dazu eingerichtet ist, das erzeugte Bild des Fahrzeugreifens als Eingabe in das Identifikationsmodul zu geben und den Reifentyp des Fahrzeugreifens ausgehend vom erzeugten Bild des Fahrzeugreifens zu identifizieren, wobei das Identifikationsmodul dazu trainiert ist, aus dem Bild des Fahrzeugreifens den Reifentyp des Fahrzeugreifens zu identifizieren, wobei das Training mit einem Satz von Trainingsdaten erfolgt, welcher eine Vielzahl von Bildern von Fahrzeugreifen, bevorzugt Bilder von Profilabschnitten von Fahrzeugreifen, mit unterschiedlichem Reifentyp umfasst.

Das Konzept des maschinellen Lernens an sich sowie geeignete Algorithmen zum maschinellen Lernen sind dem Fachmann ausgehend von seinem Fachwissen grundlegend vertraut und auf maschinellem Lernen basierende Computerprogrammprodukte, welche auf die Erfordernisse der vorliegenden Erfindung angepasst werden können, sind von zahlreichen Herstellern kommerziell erhältlich. Beispielhaft ist ein erfindungsgemäßes Verfahren, wobei das Identifikationsmodul auf einem Algorithmus zum maschinellen Lernen basiert, der ausgewählt ist aus der Gruppe bestehend aus überwachtem Lernen, bevorzugt ausgewählt ist aus der Gruppe bestehend aus logistische Regression, Support vector machines, K-nearest neighbors-Verfahren, Entscheidungsbaumverfahren und künstlichen neuronalen Netzen, besonders bevorzugt ausgewählt ist aus der Gruppe bestehend aus künstlichen neuronalen Netzen, und/oder wobei das Identifikationsmodul erhalten wird durch Anwendung eines Algorithmus zum maschinellen Lernen auf den Satz von Trainingsdaten, wobei der Algorithmus ausgewählt ist aus der Gruppe bestehend aus überwachtem Lernen, bevorzugt ausgewählt ist aus der Gruppe bestehend aus logistische Regression, Support vector machines, K-nearest neighbors-Verfahren, Entscheidungsbaumverfahren und künstlichen neuronalen Netzen, besonders bevorzugt ausgewählt ist aus der Gruppe bestehend aus künstlichen neuronalen Netzen.

Zum Erhalt des Identifikationsmoduls (d.h. dem "Training") greift der Fachmann auf einen Trainingssatz von Trainingsdaten zurück, bei denen es sich um Aufnahmen von Fahrzeugreifen bekannten Reifentyps handelt, sodass das Identifikationsmodul mittels überwachtem Lernen (sogenanntes "supervised learning") trainiert werden kann, um die gewünschte Funktionalität zu ermöglichen.

Die optische Detektionseinheit dient dazu, eine grafische Repräsentation der zu bewertenden Oberflächentopografie des Fahrzeugreifens zu erhalten, wobei sie zu diesem Zweck vorteilhafterweise eine optische Bilderfassungsvorrichtung umfasst. Bevorzugt ist dabei ein erfindungsgemäßes Verfahren, wobei die optische Detektionseinheit eine zweite optische Bilderfassungsvorrichtung, umfasst, wobei das Detektieren in Verfahrensschritt b) das Erzeugen eines Bildes der Oberflächentopografie des Fahrzeugreifens, bevorzugt der Oberflächentopografie eines Profilabschnitts des Fahrzeugreifens, mit der zweiten optischen Bilderfassungsvorrichtung umfasst.

Der Fachmann versteht, dass in der Kombination der optischen Detektionseinheit mit der bevorzugten Ausgestaltung der Identifikationseinheit die für die Verfahrensschritte a) und b) eingesetzten Einheiten jeweils auf eine Bilderfassungsvorrichtung zurückgreifen. Auch wenn es theoretisch möglich ist, hierfür separate optische Bilderfassungsvorrichtungen einzusetzen, ist es für im Wesentlichen sämtliche Ausführungsformen bevorzugt, wenn beide Funktionalitäten durch die gleiche optische Bilderfassungsvorrichtung geleistet werden können. Besonders bevorzugt ist entsprechend ein erfindungsgemäßes Verfahren, wobei die erste optische Bilderfassungsvorrichtung und die zweite optische Bilderfassungsvorrichtung durch die gleiche optische Bilderfassungsvorrichtung gebildet werden, wobei die in Verfahrensschritt b) detektierte Oberflächentopografie bevorzugt zum Identifizieren des Reifentyps in Verfahrensschritt a) verwendet wird.

Nach Einschätzung der Erfinder mag es für spezialisierte Anwendungen interessant sein, für die optische Bilderfassung auf elektromagnetische Strahlung zurückzugreifen, bei der es sich nicht um sichtbares Licht handelt. Vor allem für Spezialfälle bevorzugt ist ein erfindungsgemäßes Verfahren, wobei die erste optische Bilderfassungsvorrichtung und/oder die zweite optische Bilderfassungsvorrichtung dazu eingerichtet ist, elektromagnetische Strahlung zu erfassen und zu verarbeiten, die ausgewählt ist aus der Gruppe bestehend aus IR-Strahlung und Radiowellen, bevorzugt IR-Strahlung.

Für die weit überwiegende Zahl der Fälle ist es jedoch explizit bevorzugt, auf eine optische Bilderfassung zurückzugreifen, welche im Wesentlichen auf sichtbares Licht zurückgreift. Dies ist nicht nur besonders ungefährlich, sondern ermöglicht auch den Einsatz von Kameras und der hierfür notwendigen Software, die zu niedrigen Preisen und in vielfachen Ausgestaltungen kommerziell erhältlich sind und insbesondere auch in typischen elektronischen Endgeräten verbaut sind, die beim Endanwender häufig ohnehin verfügbar sind. Besonders bevorzugt ist somit ein erfindungsgemäßes Verfahren, wobei die erste optische Bilderfassungsvorrichtung und/oder die zweite optische Bilderfassungsvorrichtung, zumindest eine Kamera umfassen. Bevorzugt ist zusätzlich oder alternativ ein erfindungsgemäßes Verfahren, wobei die erste optische Bilderfassungsvorrichtung und/oder die zweite optische Bilderfassungsvorrichtung, zumindest eine Beleuchtungsvorrichtung, bevorzugt eine LED, umfassen.

Während die im Zuge der Identifikation erfolgte erste optische Bilderfassung vom Vorliegen von dreidimensionalen Profilinformationen nach Einschätzung der Erfinder profitiert, ist es für die zweite optische Bilderfassung im Rahmen der optischen Detektionseinheit wichtig, zumindest teilweise, bevorzugt möglichst weitgehend, auch dreidimensionale Informationen zu erhalten. Im Rahmen der vorliegenden Erfindung wird dies dadurch ausgedrückt, dass in Verfahrensschritt b) eine Oberflächentopografie detektiert wird. Dies bedeutet, dass die optische Detektionseinheit eine Bildaufnahme erzeugt, aus der zumindest teilweise Höheninformationen verfügbar sind. Im einfachsten Fall wird dies durch die Beleuchtungssituation und den Schattenwurf im Profil des Fahrzeugreifens bzw. die Ausrichtung der Bilderfassung im Moment der Aufnahme realisiert. Nach Einschätzung der Erfinder ist eine entsprechende Vorgehensweise zwar möglich, erfordert hinsichtlich der Auswertung jedoch vergleichsweise viel Rechenleistung und ist in Abhängigkeit von der Beleuchtungssituation potentiell fehleranfällig. Deswegen schlagen die Erfinder vor, weitere Maßnahmen vorzusehen, mit denen die detektierte Oberflächentopografie mit höherem Informationsgehalt erhalten werden kann. Insoweit schlagen die Erfinder vor, dass auf das Konzept des photometrischen Stereo bzw. artverwandte Konzepte zurückgegriffen werden kann, um aus den Aufnahmen voneinander beabstandeter Kameras und/oder aus Aufnahmen bei unterschiedlichen Beleuchtungssituationen, welche durch voneinander beabstandete Beleuchtungsvorrichtungen realisiert werden, eine Oberflächentopografie mit erhöhten Informationsgehalt zu erhalten, da diese beispielsweise als dreidimensionales Bild und/oder in Form einer topografische Repräsentation, beispielsweise in Form einer topografischen Karte, erhalten werden kann. Bevorzugt ist folglich ein erfindungsgemäßes Verfahren, wobei die erste optische Bilderfassungsvorrichtung und/oder die zweite optische Bilderfassungsvorrichtung bevorzugt zwei oder mehr voneinander beabstandete Kameras umfassen, wobei die elektronische Datenverarbeitungsvorrichtung dazu eingerichtet ist, aus den Aufnahmen der Kameras ein dreidimensionales Bild und/oder eine topographische Repräsentation des Profilabschnitts des Fahrzeugreifens zu berechnen.

Bevorzugt ist ein erfindungsgemäßes Verfahren, wobei die erste optische Bilderfassungsvorrichtung und/oder die zweite optische Bilderfassungsvorrichtung zwei oder mehr voneinander beabstandete Beleuchtungsvorrichtungen umfassen, wobei die elektronische Datenverarbeitungsvorrichtung dazu eingerichtet ist, aus verschiedenen Aufnahmen der Kamera bei unterschiedlicher Beleuchtung ein dreidimensionales Bild und/oder eine topographische Repräsentation des Profilabschnitts des Fahrzeugreifens zu berechnen.

Zur Reduktion der notwendigen Rechenleistung und zur Verbesserung der Qualität und Zuverlässigkeit der erhaltenen Oberflächentopografie schlagen die Erfinder insbesondere vor, zusätzlich Projektionsvorrichtungen einzusetzen, um beispielsweise ein Gitternetz von Linien oder Leuchtpunkten auf den Fahrzeugreifen zu projizieren, wobei die Verzerrung des so aufgebrachten Musters auf dem Fahrzeugreifen eine leichtere und zuverlässigere Identifikation der Höheninformation ermöglicht. Vorteilhaft an dieser Ausgestaltung ist auch, dass viele moderne elektronische Endgeräte, beispielsweise Mobiltelefone, vergleichbare Projektionsvorrichtungen enthalten, mit denen beispielsweise die Gesichtserkennung unterstützt bzw. ermöglicht wird. Der Fachmann versteht dabei, dass die für die Projektion verwendete elektromagnetische Strahlung nicht zwangsläufig im Bereich des sichtbaren Lichtes liegen muss, sondern beispielsweise auch im IR-Bereich liegen kann, sofern die eingesetzte optische Detektionseinheit dazu in der Lage ist, die auf den Fahrzeugreifen projizierten Strukturen bzw. deren Abbildung auf dem Profil wahrzunehmen. Bevorzugt ist daher ein erfindungsgemäßes Verfahren, wobei die erste optische Bilderfassungsvorrichtung und/oder die zweite optische Bilderfassungsvorrichtung, eine Projektionsvorrichtung umfasst, die dazu eingerichtet ist, beim Identifizieren und/oder Detektieren ein Muster, beispielsweise in Form eines Gitternetzes oder eines Rasters, auf den Profilabschnitt des Fahrzeugreifens zu projizieren, wobei die Datenverarbeitungsvorrichtung dazu eingerichtet ist, aus der von der optischen Detektionseinheit detektierten Abbildung des Musters auf dem Profilabschnitt des Fahrzeugreifens ein dreidimensionales Bild und/oder eine topographische Repräsentation des Profilabschnitts des Fahrzeugreifens zu berechnen.

In Verfahrensschritt c) erfolgt nunmehr die Korrelation der wie vorstehend detektierten Oberflächentopografie mit Profilinformationen, welche mit dem identifizierten Reifentyp verknüpft sind. Wie vorstehend erläutert, wird die Funktion der Bewertungseinheit in der Praxis insbesondere durch die Datenverarbeitungsvorrichtung bzw. ein entsprechendes Computerprogrammprodukt gewährleistet. In anderen Worten handelt es sich um ein erfindungsgemäßes Verfahren, wobei die elektronische Datenverarbeitungsvorrichtung dazu eingerichtet ist, als Bewertungseinheit durch Korrelation der detektierten Oberflächentopografie mit zumindest einer mit dem identifizierten Reifentyp verknüpften Profilinformation den Zustandes des Profilabschnitts zu bewerten, um eine Zustandsinformation zu erhalten. Bevorzugt ist dabei ein erfindungsgemäßes Verfahren, wobei die mit dem identifizierten Reifentyp des Fahrzeugreifens verknüpften Profilinformationen auf der Speichereinheit gespeichert sind.

Die mit dem Reifentyp verknüpfte Profilinformation, die bei der Bewertung des Zustands des Profilabschnitts zum Korrelieren herangezogen wird, hängt in Übereinstimmung mit dem fachmännischen Verständnis maßgeblich von der Art der detektierten Oberflächentopografie ab. Wenn sich die detektierte Oberflächentopografie in einem besonders einfachen Beispiel auf die verbleibende Profiltiefe einer Profilrille bezieht, kann die herangezogene Profilinformation beispielsweise aus geometrischen Referenzdaten des Ausgangsprofils, d. h. beispielsweise zur Ausgangsprofilrillentiefe bestehen, sodass durch Korrelation ermittelt werden kann, wie weit die Profiltiefe bereits reduziert wurde. Der Fachmann versteht, dass vorteilhafterweise mehr und mehr Informationen ausgehend von diesem einfachen Szenario erhalten werden können, wenn die detektierte Oberflächentopografie mehrere Informationen über die Profiltiefe an mehreren Punkten umfasst, die jeweils mit geometrischen Referenzdaten abgeglichen werden können. In der Weiterentwicklung werden besonders vorteilhafte Verfahren dann erhalten, wenn der Abstand zwischen den Messpunkten der detektierten Oberflächentopografie immer kleiner wird und diese von einer Zusammenstellung von diskreten Messpunkten der Profiltiefe in ein im Wesentlichen kontinuierliches, dreidimensionales Bild bzw. einer topografische Repräsentation des abgenutzten Fahrzeugreifens übergeht, in welchem Fall auf eine entsprechende Profilinformation für den bewerteten Fahrzeugreifentyp zurückgegriffen wird. Bevorzugt ist insoweit ein erfindungsgemäßes Verfahren, wobei die mit dem identifizierten Reifentyp des Fahrzeugreifens verknüpften Profilinformationen ausgewählt ist aus der Gruppe bestehend aus geometrische Referenzdaten des Ausgangsprofils, insbesondere zu Profiltiefen und Profilstrukturen, dreidimensionalen Bildern des Ausgangsprofils und topographischen Repräsentationen des Ausgangsprofils.

Insbesondere dann, wenn nicht auf die nachfolgend beschriebenen Methoden des maschinellen Lernens zum Bewerten des Zustandes des Profilabschnitts zurückgegriffen wird, eignen sich vorteilhafterweise besonders einfache Rechenoperationen dazu, um die detektierte Oberflächentopografie mit der entsprechenden Profilinformation zu korrelieren. Hierfür eignet sich beispielsweise die Differenzbildung oder ähnliche Operationen, mit der beispielsweise eine absolute und/oder relative Veränderung dargestellt werden können, wobei beispielsweise bei der Korrelation von dreidimensionalen Bildern oder topografischen Repräsentationen auch Differenzbilder bzw. Differenzrepräsentationen erzeugt werden können, aus denen der ortsaufgelöste Abrieb sichtbar ist. Bevorzugt ist entsprechend ein erfindungsgemäßes Verfahren, wobei die Korrelation der detektierten Oberflächentopografie mit zumindest einer mit dem identifizierten Reifentyp verknüpften Profilinformation eine Operation umfasst, die ausgewählt ist aus der Gruppe bestehend aus Differenzbildungen und Überlagerungen.

Die vorstehend beschriebenen, besonders einfachen Methoden der Korrelation setzen zweckmäßigerweise auf solche Profilinformationen, die in der Speichereinheit der Zustandsbewertungsvorrichtung hinterlegt sind. Eine besonders leistungsfähige Ausgestaltung wird jedoch dann erreicht, wenn die einzelnen Profilinformationen zu den verschiedenen Reifentypen nicht mehr selbst in der Speichereinheit gespeichert werden, sondern wenn stattdessen auf maschinelles Lernen zurückgegriffen wird, um durch geeignetes Training ein Bewertungsmodul zu schaffen, welches die detektierte Oberflächentopografie mit einem entsprechenden Fahrzeugreifentyp dahingehend korreliert, dass die Profilinformationen in einem Training des Bewertungsmoduls liegen. Das Bewertungsmodul kann zweckmäßigerweise mittels überwachten Lernens aus einem Trainingssatz an Fahrzeugreifen des bekannten Typs erstellt werden, welche über einen unterschiedlichen, aber bekannten Abriebsstand verfügen und zumindest teilweise Abriebsphänomene aufweisen, welche infolge eines unregelmäßigen Abriebs auftreten. Bevorzugt ist folglich ein erfindungsgemäßes Verfahren, wobei auf der Speichereinheit ein auf maschinellem Lernen basierendes Bewertungsmodul gespeichert ist, wobei die elektronische Datenverarbeitungsvorrichtung dazu eingerichtet ist, die detektierte Oberflächentopografie als Eingabe in das Bewertungsmodul zu geben und den Zustand des Profilabschnitts ausgehend von der detektierten Oberflächentopografie zu bewerten, wobei das Bewertungsmodul dazu trainiert ist, aus detektierten Oberflächentopografien eines Profilabschnitts eines bekannten Reifentyps den Zustand des Profilabschnitts zu bewerten, wobei das Training mit einem Satz von Trainingsdaten erfolgt, welches eine Vielzahl von Oberflächentopografien von Profilabschnitten von Fahrzeugreifen mit unterschiedlichen Abnutzungsgraden und/oder Abriebs-Phänomenen umfasst, wobei durch das Bewertungsmodul die Korrelation der detektierten Oberflächentopografie mit der im Satz von Trainingsdaten enthaltenen Profilinformation erfolgt.

Wie auch vorstehend für die Identifikationseinheit offenbarte Ausführungsform unter Einsatz vom maschinellen Lernen, stellt das Zusammenstellen eines notwendigen Trainingssatzes für den Fachmann auch hier kein Problem dar, wobei der Fachmann auch insoweit auf kommerziell erhältliche Computerprogrammprodukte und unter Einsatz vom maschinellen Lernen erzeugte Module zurückgreifen kann, die er an die Erfordernisse des jeweiligen Anwendungsfalles anpassen kann. Bevorzugt ist auch insoweit ein erfindungsgemäßes Verfahren, wobei das Bewertungsmodul auf einem Algorithmus zum maschinellen Lernen basiert, der ausgewählt ist aus der Gruppe bestehend aus überwachtem Lernen, bevorzugt ausgewählt ist aus der Gruppe bestehend aus logistische Regression, Support vector machines, K-nearest neighbors-Verfahren, Entscheidungsbaumverfahren und künstlichen neuronalen Netzen, besonders bevorzugt ausgewählt ist aus der Gruppe bestehend aus künstlichen neuronalen Netzen, und/oder wobei das Bewertungsmodul erhalten wird durch Anwendung eines Algorithmus zum maschinellen Lernen auf den Satz von Trainingsdaten, wobei der Algorithmus ausgewählt ist aus der Gruppe bestehend aus überwachtem Lernen, bevorzugt ausgewählt ist aus der Gruppe bestehend aus logistische Regression, Support vector machines, K-nearest neighbors-Verfahren, Entscheidungsbaumverfahren und künstlichen neuronalen Netzen, besonders bevorzugt ausgewählt ist aus der Gruppe bestehend aus künstlichen neuronalen Netzen. Bevorzugt ist insoweit ein erfindungsgemäßes Verfahren, wobei der Satz von Trainingsdaten eine Vielzahl von Oberflächentopografien von Profilabschnitten von Fahrzeugreifen einer Vielzahl verschiedener Reifentypen umfasst.

Im Verfahrensschritt d) wird nunmehr das Ergebnis der Korrelation, d. h. die Zustandsinformation, von der Zustandsbewertungsvorrichtung ausgegeben. Hinsichtlich der Art und Weise dieser Ausgabe besteht insoweit eine breite Palette an Möglichkeiten, die insbesondere davon abhängt, welche Informationstiefe im erfindungsgemäßen Verfahren an den Nutzer ausgegeben werden soll. In der einfachsten Ausgestaltung wäre es beispielsweise denkbar, dass das Ausgeben der Zustandsinformation sich auf den Hinweis beschränkt, dass ein Reifenwechsel notwendig ist. Bevorzugt ist insoweit ein erfindungsgemäßes Verfahren, wobei das Ausgeben der Zustandsinformation die Ausgabe eines Warnhinweises zu einem notwendigen Reifenwechsel und/oder zu einer notwendigen Konfigurationsänderung am Fahrzeug umfasst.

Auch wenn die Ausgabe in Verfahrensschritt d) theoretisch beispielsweise lediglich durch einen Signalton erfolgen könnte, ist es mit Blick auf die Anwenderakzeptanz für im Wesentlichen alle Ausführungsformen bevorzugt, wenn die Zustandsinformation zumindest anteilig visuell über ein Display ausgegeben wird. In Abhängigkeit von der Komplexität der detektierten Oberflächentopografie und des Resultates der darauf aufbauenden Korrelation der Profilinformationen variiert der Detailgrad der ausgegebenen Zustandsinformationen. Bevorzugt ist ein erfindungsgemäßes Verfahren, wobei die Ausgabeeinheit ein Display umfasst.

Wenn, wie vorstehend offenbart, in besonders bevorzugten Verfahren dreidimensionale Bildinformationen bzw. topografische Repräsentationen für den Fahrzeugreifen aufgenommen und mit hinterlegten Profilinformationen verglichen werden, ist es insbesondere bevorzugt, diese besonders detailreichen Informationen auch als Zustandsinformationen auszugeben. Hierbei bestehen nach Einschätzung der Erfinder in vorteilhafter Weise zahlreiche Darstellungsmöglichkeiten, die auch dem ungeschulten Endanwender ein klares Verständnis vermitteln, wie der Zustand des untersuchten Fahrzeugreifens zu bewerten ist, beispielsweise wenn eine grafische Überlagerung der detektierten Oberflächentopografie mit der ursprünglichen Oberflächentopografie erfolgt und/oder eine Differenzdarstellung wiedergegeben wird, die beispielsweise mit einer Farbkodierung verdeutlichen kann, in welchen Bereichen ein zu großer Abrieb beobachtet wurde, beispielsweise wenn diese Bereiche mit einer Warnfarbe eingefärbt werden. Bevorzugt ist ein erfindungsgemäßes Verfahren, wobei das Ausgeben der Zustandsinformation die Ausgabe eines dreidimensionalen Bildes des Profilabschnitts und/oder einer topographischen Repräsentation des Profilabschnitts umfasst.

Der Fachmann versteht, dass mit dem erfindungsgemäßen Verfahren in vorteilhafter Weise besonders detaillierte Informationen über den ortsaufgelösten Abriebszustands eines Fahrzeugreifens erhalten werden können, die zudem noch reifentypspezifisch sind. Durch dieses vorteilhafte hohe Maß an Informationen lassen sich nach Erkenntnis der Erfinder in vorteilhafter Weise Rückschlüsse auf etwaige Fahrwerksunstimmigkeiten ziehen. Entsprechend kann die Zustandsinformation auch Informationen über eine vorgeschlagene Anpassung der Fahrzeugkonfiguration enthalten, wie diese einzustellen ist, um die Auswirkung der Fahrwerksunstimmigkeiten zu minimieren und dadurch eine längere Haltbarkeit der Reifen und ein gleichmäßigeres Abriebsverhalten zu befördern, wobei insbesondere eine Anpassung des Reifendrucks, der Bremseinstellung und der Achsausrichtung denkbar sind. Die Erfindung betrifft somit zudem ein Verfahren zur Konfiguration eines Fahrzeuges, umfassend die Verfahrensschritte des erfindungsgemäßen Verfahrens sowie den Verfahrensschritt:
e) Verändern zumindest einer Fahrzeugkonfiguration in Abhängigkeit von der ausgegebenen Zustandsinformation.

Bevorzugt ist dabei ein erfindungsgemäßes Verfahren, wobei die in Verfahrensschritt e) veränderte Fahrzeugkonfiguration ausgewählt ist aus der Gruppe bestehend aus Reifendruck, Bremseneinstellung und Achsausrichtung.

Je nach der gewünschten Ausgestaltung des erfindungsgemäßen Verfahrens zur Konfiguration eines Fahrzeuges kann die erweiterte Zustandsinformation, welche zudem Informationen über die Anpassung der Fahrzeugkonfiguration enthält, beispielsweise lediglich rudimentäre Hinweise enthalten, wie beispielsweise "Reifendruck erhöhen" oder "Bremsen erneuern". Solche Informationen sind für den Fachmann ausgehend von seinem allgemeinen Fachwissen den unterschiedlichen Zustandsinformationen und der damit verknüpften Ausgabe relativ leicht zuzuordnen.

Darüber hinaus schlagen die Erfinder jedoch vor, in analoger Weise zu den vorstehenden Ausführungen auch in diesem Bereich auf maschinelles Lernen zurückzugreifen, sodass eine Konfigurationsanpassungseinheit erhalten wird, die zielgenau und detailreiche Vorschläge zur Fahrzeugkonfiguration unterbreiten kann. Angesichts des hierfür notwendigen Trainingsaufwands und der doch recht spezifischen Abhängigkeit des Reifenabriebs vom Fahrzeugtyp schlagen die Erfinder jedoch vor, dass dies in der Praxis zumeist den Einsatz von fahrzeugtypenspezifischer Software erfordern dürfte, sodass das entsprechende Konfigurationsmodul mit einem Datensatz von benutzten Reifen trainiert wird, die sämtlich an einem spezifischen Fahrzeugtyp bzw. Modell und unter Variation der Fahrzeugkonfiguration abgefahren wurden. Entsprechend ist eine solche Lösung nach Einschätzung der Erfinder eher für Fahrzeughersteller geeignet, insbesondere wenn diese den Einsatz einer begrenzten Anzahl von spezifischen Reifentypen empfehlen.

Der Fachmann versteht, dass die Erfindung zudem eine Zustandsbewertungsvorrichtung betrifft, die die für die jeweiligen Einheiten notwendigen baulichen Elemente umfasst, beispielsweise eine Kamera für die Identifikationseinheit und die optische Detektionseinheit sowie ein Display für die Ausgabeeinheit und welche darüber hinaus durch die elektronische Datenverarbeitungsvorrichtung und die darauf ablaufenden Computerprogrammprodukte spezifisch dafür eingerichtet ist, die Funktionalität der vier benötigten Einheiten zur Durchführung des erfindungsgemäßen Verfahrens zu ermöglichen. Die Erfindung betrifft somit auch eine Zustandsbewertungsvorrichtung für den Einsatz in einem erfindungsgemäßen Verfahren, umfassend eine elektronische Datenverarbeitungsvorrichtung mit einer Speichereinheit sowie:
i) eine Identifikationseinheit zum Identifizieren des Reifentyps eines Fahrzeugreifens,
ii) eine optische Detektionseinheit zum Detektieren der Oberflächentopografie eines Profilabschnitts des Fahrzeugreifens,
iii) eine Bewertungseinheit zum Erhalt einer Zustandsinformation durch Korrelieren einer detektierten Oberflächentopografie mit zumindest einer mit dem identifizierten Reifentyp verknüpften Profilinformation, und
iv) eine Ausgabeeinheit zum Ausgeben der Zustandsinformation.

Offenbart wird abschließend auch ein Computerprogrammprodukt, umfassend Befehle, die bei der Ausführung des Programms durch eine Datenverarbeitungsvorrichtung einer erfindungsgemäßen elektronischen Zustandsbewertungsvorrichtung, diese veranlasst, die Verfahrensschritte des erfindungsgemäßen Verfahrens auszuführen.

Nachfolgend werden bevorzugte Ausführungsformen der Erfindung unter Bezugnahme auf die beiliegenden Figuren näher erläutert und beschrieben. Dabei zeigen:
- Fig. 1: ein Flussdiagramm des erfindungsgemäßen Verfahrens zur Bewertung des Profilzustandes von Fahrzeugreifen bzw. zur Konfiguration eines Fahrzeuges; und
- Fig. 2: eine schematische Darstellung einer erfindungsgemäßen Zustandsbewertungsvorrichtung im Einsatz in einem erfindungsgemäßen Verfahren.

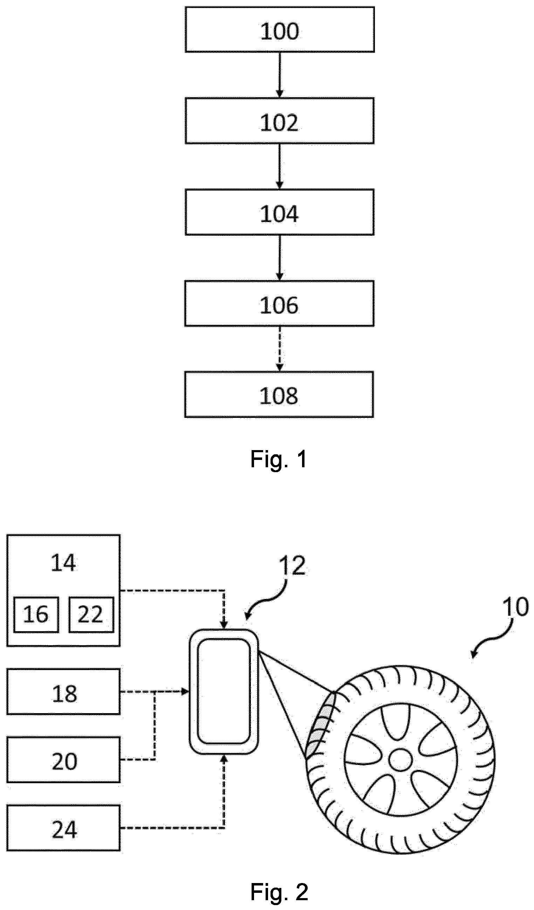

Fig. 1 zeigt ein Flussdiagramm der einzelnen Verfahrensschritte des erfindungsgemäßen Verfahrens zur Bewertung des Profilzustandes von Fahrzeugreifen 10 sowie ergänzend des darauf aufbauenden erfindungsgemäßen Verfahrens zur Konfiguration eines Fahrzeuges. Das Verfahren wird mithilfe einer Zustandsbewertungsvorrichtung 12 umfassend eine Datenverarbeitungsvorrichtung 14 sowie eine Speichereinheit 16 durchgeführt.

Eine schematische Visualisierung des Verfahrens und der Zustandsbewertungsvorrichtung 12 sowie der von ihr in einer bevorzugten Ausführungsform umfassten Komponenten ist in Fig. 2 gezeigt, wobei die Zustandsbewertungsvorrichtung 12 hier als Mobiltelefon ausgebildet ist.

Das Verfahren umfasst zunächst in einem ersten Verfahrensschritt 100 die Identifikation des Reifentyps des Fahrzeugreifens 10 mit einer Identifikationseinheit 18 der Zustandsbewertungsvorrichtung 12. Die Identifikation des Reifentyps erfolgt beispielsweise durch eine elektronische Ausleseeinheit oder eine erste optische Bilderfassungsvorrichtung der Identifikationseinheit 18.

Die elektronische Ausleseeinheit kann beispielsweise ein RFID-Element oder einen QR-Code bzw. Barcode am Fahrzeugreifen 10 auslesen, welcher Informationen zum Reifentyp oder Hersteller enthält. Wie in Fig. 2 gezeigt, kann die erste optische Bilderfassungsvorrichtung alternativ oder zusätzlich hierzu auch ein Bild des Laufstreifens des Fahrzeugreifens 10 aufnehmen, welches von der Datenverarbeitungsvorrichtung 14 zur Identifikation des Reifentyps ausgewertet wird. Die Auswertung kann dabei beispielsweise über einen Abgleich des erzeugten Bildes mit in der Speichereinheit 16 gespeicherten Bildern von Fahrzeugreifen 10 verschiedenen Reifentyps erfolgen, wobei dies im gezeigten Beispiel konkret über ein auf maschinellem Lernen basierendes, auf der Speichereinheit 16 gespeichertes, Identifikationsmodul umgesetzt wird, welches anhand eines Satzes von Trainingsdaten darauf trainiert ist ausgehend vom erzeugten Bild, den Reifentyp des Fahrzeugreifens 10 zu identifizieren.

In einem weiteren Verfahrensschritt 102 wird eine optische Detektionseinheit 20 der Zustandsbewertungsvorrichtung 12 dazu verwendet, eine Oberflächentopografie für zumindest einen Profilabschnitt des Fahrzeugreifens 10 zu detektieren. Die optische Detektionseinheit 20 umfasst hierfür eine zweite optische Bilderfassungsvorrichtung, wobei im gezeigten Beispiel der Fig. 2 die erste und die zweite optische Bilderfassungsvorrichtung durch die gleiche optische Bilderfassungsvorrichtung gebildet werden, welche als Kamera ausgebildet ist, so dass das Identifizieren des Reifentyps im gezeigten Beispiel anhand der detektierten Oberflächentopografie erfolgt.

Die optische Bilderfassungsvorrichtung umfasst im gezeigten Beispiel der Fig. 2 jeweils zwei voneinander beabstandete Kameras und LEDs, sodass die elektronische Datenverarbeitungsvorrichtung 14 aus den Aufnahmen der Kameras bei unterschiedlicher Beleuchtung ein dreidimensionales Bild bzw. eine topographische Repräsentation des Profilabschnitts des Fahrzeugreifens 10 berechnen kann. Zur Unterstützung dieser Berechnung umfasst die optische Bilderfassungsvorrichtung eine Projektionsvorrichtung (nicht gezeigt), mit der mittels IR-Strahlung ein Raster auf den Profilabschnitt des Fahrzeugreifens 10 projiziert werden kann, dessen Verzerrung Rückschlüsse auf die dreidimensionale Struktur des Profilabschnitts ermöglicht.

In einem weiteren Verfahrensschritt 104 erfolgt anschließend eine Bewertung des Zustandes des Profilabschnitts mit einer Bewertungseinheit 22 der Zustandsbewertungsvorrichtung 12. Die Bewertungseinheit 22 wird im gezeigten Beispiel von der Datenverarbeitungsvorrichtung 14 umfasst, welche analog zu dem vorstehend beschriebenen Identifikationsmodul mithilfe eines auf maschinellem Lernen basierenden Bewertungsmoduls, welches in der Speichereinheit 16 gespeichert ist, eine Zustandsinformation erhalten kann.

Die Bewertung erfolgt dabei durch Korrelation der detektierten Oberflächentopografie mit zumindest einer mit dem identifizierten Reifentyp verknüpften Profilinformation, um eine Zustandsinformation zu erhalten. Hierfür ist das Bewertungsmodul dazu trainiert, aus detektierten Oberflächentopografien eines Profilabschnitts eines bekannten Reifentyps den Zustand des Profilabschnitts anhand eines Satzes von Trainingsdaten zu bewerten. Die Trainingsdaten umfassen beispielsweise eine Vielzahl von Oberflächentopografien von Profilabschnitten von Fahrzeugreifen 10 mit unterschiedlichen Abnutzungsgraden und/oder Abriebs-Phänomenen. Alternativ ist die Bewertungseinheit 22 dazu eingerichtet, die detektierte Oberflächentopografie mittels einfacher Differenzbildung oder Überlagerung mit den hinterlegten Profilinformationen zu korrelieren.

In einem abschließenden Schritt 106 umfasst das Bewertungsverfahren zur Bewertung des Profilzustandes von Fahrzeugreifen 10 das Ausgeben der Zustandsinformation, beispielsweise eines graphisch aufbereiteten dreidimensionalen Bildes des Profilabschnitts oder einer eingefärbten topographischen Repräsentation des Profilabschnitts, über eine Ausgabeeinheit 24 der Zustandsbewertungsvorrichtung 12. Im gezeigten Beispiel der Fig. 2 umfasst dies beispielsweise die Ausgabe eines Warnhinweises zu einem notwendigen Reifenwechsel sowie einer notwendigen Konfigurationsänderung am Fahrzeug. Im Gezeigten Beispiel der Fig. 2 erfolgt die Ausgabe über das Display des mobilen Endgeräts.

Das hieran anknüpfende Verfahren zur Konfiguration eines Fahrzeuges umfasst zusätzlich einen Verfahrensschritt 108, in welchem in Abhängigkeit von der ausgegebenen Zustandsinformation zumindest eine Fahrzeugkonfiguration verändert wird, beispielsweise der Reifendruck, die Bremseneinstellung oder die Achsausrichtung des Fahrzeuges.

### Bezugszeichenliste

- 10: Fahrzeugreifen
- 12: Zustandsbewertungsvorrichtung
- 14: Datenverarbeitungsvorrichtung
- 16: Speichereinheit
- 18: Identifikationseinheit
- 20: optische Detektionseinheit
- 22: Bewertungseinheit
- 24: Ausgabeeinheit

- 100: Verfahrensschritt a)
- 102: Verfahrensschritt b)
- 104: Verfahrensschritt c)
- 106: Verfahrensschritt d)
- 108: Verfahrensschritt e)

## Patentansprüche

1. Verfahren zur Bewertung des Profilzustandes von Fahrzeugreifen (10), insbesondere der Profiltiefe und des Abriebzustandes, mit einer Zustandsbewertungsvorrichtung (12), umfassend eine elektronische Datenverarbeitungsvorrichtung (14) mit einer Speichereinheit (16), umfassend die Verfahrensschritte:
a) Identifizieren des Reifentyps eines Fahrzeugreifens (10) mit einer Identifikationseinheit (18) der Zustandsbewertungsvorrichtung (12),
b) Detektieren einer Oberflächentopografie für zumindest einen Profilabschnitt des Fahrzeugreifens (10) mit einer optischen Detektionseinheit (20) der Zustandsbewertungsvorrichtung (12),
c) Bewerten des Zustandes des Profilabschnitts durch Korrelation der detektierten Oberflächentopografie mit zumindest einer mit dem identifizierten Reifentyp verknüpften Profilinformation mit einer Bewertungseinheit (22) der Zustandsbewertungsvorrichtung (12) zum Erhalt einer Zustandsinformation, und
d) Ausgeben der Zustandsinformation über eine Ausgabeeinheit (24) der Zustandsbewertungsvorrichtung (12).

2. Verfahren nach Anspruch 1, wobei die elektronische Zustandsbewertungsvorrichtung (12) eine tragbare Zustandsbewertungsvorrichtung (12) ist.

3. Verfahren nach einem der Ansprüche 1 oder 2, wobei die Identifikationseinheit (18) eine elektronische Ausleseeinheit umfasst, die dazu eingerichtet ist, ein im Fahrzeugreifen (10) angeordnetes elektronisches Identifikationselement oder ein am Fahrzeugreifen (10) angeordnetes Kennzeichnungselement auszulesen, um den Reifentyp über eine vom Identifikationselement oder Kennzeichnungselement auslesbare Information zu identifizieren.

4. Verfahren nach einem der Ansprüche 1 oder 2, wobei die Identifikationseinheit (18) eine erste optische Bilderfassungsvorrichtung umfasst,
wobei das Identifizieren in Verfahrensschritt a) das Erzeugen eines Bildes des Fahrzeugreifens (10), bevorzugt eines Profilabschnitts des Fahrzeugreifens (10), mit der ersten optischen Bilderfassungsvorrichtung umfasst,
wobei die elektronische Datenverarbeitungsvorrichtung (14) dazu eingerichtet ist, den Reifentyp des Fahrzeugreifens (10) ausgehend vom erzeugten Bild des Fahrzeugreifens (10) zu identifizieren.

5. Verfahren nach einem der Ansprüche 1 bis 4, wobei die optische Detektionseinheit (20) eine zweite optische Bilderfassungsvorrichtung, umfasst,
wobei das Detektieren in Verfahrensschritt b) das Erzeugen eines Bildes der Oberflächentopografie des Fahrzeugreifens (10), bevorzugt der Oberflächentopografie eines Profilabschnitts des Fahrzeugreifens (10), mit der zweiten optischen Bilderfassungsvorrichtung umfasst.

6. Verfahren nach einem der Ansprüche 1 bis 5, wobei die erste optische Bilderfassungsvorrichtung und die zweite optische Bilderfassungsvorrichtung durch die gleiche optische Bilderfassungsvorrichtung gebildet werden.

7. Verfahren nach einem der Ansprüche 1 bis 6, wobei die erste optische Bilderfassungsvorrichtung und/oder die zweite optische Bilderfassungsvorrichtung, eine Projektionsvorrichtung umfasst, die dazu eingerichtet ist, beim Identifizieren und/oder Detektieren ein Muster auf den Profilabschnitt des Fahrzeugreifens (10) zu projizieren,
wobei die Datenverarbeitungsvorrichtung (14) dazu eingerichtet ist, aus der von der optischen Detektionseinheit detektierten Abbildung des Musters auf dem Profilabschnitt des Fahrzeugreifens (10) ein dreidimensionales Bild und/oder eine topographische Repräsentation des Profilabschnitts des Fahrzeugreifens (10) zu berechnen.

8. Verfahren nach einem der Ansprüche 1 bis 7, wobei die elektronische Datenverarbeitungsvorrichtung (14) dazu eingerichtet ist, als Bewertungseinheit (22) durch Korrelation der detektierten Oberflächentopografie mit zumindest einer mit dem identifizierten Reifentyp verknüpften Profilinformation den Zustandes des Profilabschnitts zu bewerten, um eine Zustandsinformation zu erhalten.

9. Verfahren nach einem der Ansprüche 1 bis 8, wobei das Ausgeben der Zustandsinformation die Ausgabe eines dreidimensionalen Bildes des Profilabschnitts und/oder einer topographischen Repräsentationen des Profilabschnitts umfasst.

10. Verfahren nach einem der Ansprüche 1 bis 9, wobei das Ausgeben der Zustandsinformation die Ausgabe eines Warnhinweises zu einen notwendigen Reifenwechsel und/oder zu einer notwendigen Konfigurationsänderung am Fahrzeug umfasst.

11. Verfahren zur Konfiguration eines Fahrzeuges, umfassend die Verfahrensschritte des Verfahrens nach einem der Ansprüche 1 bis 10 sowie den Verfahrensschritt:
e) Verändern zumindest einer Fahrzeugkonfiguration in Abhängigkeit von der ausgegebenen Zustandsinformation.

12. Verfahren nach Anspruch 11, wobei die in Verfahrensschritt f) veränderte Fahrzeugkonfiguration ausgewählt ist aus der Gruppe bestehend aus Reifendruck, Bremseneinstellung und Achsausrichtung.

13. Zustandsbewertungsvorrichtung (12) für den Einsatz in einem Verfahren nach einem der Ansprüche 1 bis 12, umfassend eine elektronische Datenverarbeitungsvorrichtung (14) mit einer Speichereinheit (16) sowie:
i) eine Identifikationseinheit (18) zum Identifizieren des Reifentyps eines Fahrzeugreifens (10),
ii) eine optische Detektionseinheit (20) zum Detektieren der Oberflächentopografie eines Profilabschnitts des Fahrzeugreifens (10),
iii) eine Bewertungseinheit (22) zum Erhalt einer Zustandsinformation durch Korrelieren einer detektierten Oberflächentopografie mit zumindest einer mit dem identifizierten Reifentyp verknüpften Profilinformation, und
iv) eine Ausgabeeinheit (24) zum Ausgeben der Zustandsinformation.
